(19) Europäisches Patentamt
European Patent Office
Office européen des brevets

(11) **EP 3 121 676 B1**

(12) **EUROPEAN PATENT SPECIFICATION**

(45) Date of publication and mention
of the grant of the patent:
**28.10.2020 Bulletin 2020/44**

(51) Int Cl.:
***G05D 1/00*** *(2006.01)* ***G05D 1/10*** *(2006.01)*

(21) Application number: **15382383.6**

(22) Date of filing: **24.07.2015**

(54) **AIR VEHICLE NAVIGATION SYSTEM AND METHOD OF FLYING AN AIR VEHICLE**

LUFTFAHRZEUGNAVIGATIONSSYSTEM UND VERFAHREN ZUM FLIEGEN EINES LUFTFAHRZEUGS

SYSTÈME DE NAVIGATION DE VÉHICULE AÉRIEN ET MÉTHODE DE SUSTENTATION D'UN VÉHICULE AÉRIEN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.01.2017 Bulletin 2017/04**

(73) Proprietor: **The Boeing Company**
**Chicago, IL 60606-1596 (US)**

(72) Inventors:
• **BLANCO DEL ÁLAMO, Jose Antonio**
**28042 MADRID (ES)**
• **PEREIRA, Sergio**
**28042 MADRID (ES)**
• **LEMUS MARTÍN, Jose Luis**
**28042 MADRID (ES)**
• **FERREYRA, Eduardo Gabriel**
**28042 MADRID (ES)**
• **SERROT HAUKE, Enrique Emilio**
**28042 MADRID (ES)**
• **LAPEÑA REY, M Nieves**
**28042 MADRID (ES)**

(74) Representative: **Clarke Modet & Co.**
**C/ Suero de Quiñones 34-36**
**28002 Madrid (ES)**

(56) References cited:
**EP-A1- 2 629 166        WO-A1-2015/049681**
**US-A1- 2007 252 035**

• **Philipp Keller: "Wie überquert man die Maurienne ?", , 27 July 2013 (2013-07-27), Retrieved from the Internet: URL:http://lsvstraubing.blogspot.com/2013/06/wie-uberquert-man-die-maurienne.html [retrieved on 2018-11-29]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The present disclosure relates to an Air Vehicle Navigation System according to an environmental energy optimization policy, the system especially designed for flying Unmanned Aerial Vehicles (UAV'S) or, alternatively, Unmanned Air Vehicles. The present disclosure also relates to a method of flying an air vehicle according to an environmental energy saving policy, the method especially designed for saving energy, maximizing flight endurance and enhancing safety in the flight of UAV's.

The systems and methods of the present disclosure are applicable in the field of Aeronautic Engineering and, more particularly, in the field of Electronics and Automatic Regulation or Automatic Control for Avionics.

**BACKGROUND**

Flying a UAV usually involves a Ground Control Station (GCS) and a manual pilot taking control of the UAV at a certain distance from the ground, for take-off and landing or some other phase of flight.

One of the crucial aspects regarding the flying of a UAV is flight endurance. When the UAV is equipped with a fuel tank and a motor, or alternatively a battery and/or a fuel cell and an electric motor, flight endurance is typically limited by the amount of fuel onboard or the capacity of the battery and/or fuel cell.

In order to perform the flying of an air vehicle in an efficient manner, it is advantageous to look forward to flying the air vehicle in certain areas where thermal activity is found, so that the air vehicle may benefit from a rising air column (air ascent) thus conserving energy for the rest of the flight and resulting in an increased flight duration, battery life extension and/or fuel savings. As used herein, thermal activity refers to a thermal cone (e.g. a thermal) which is a rising or upwardly moving cone of air above a heated region, such as the ground or water surface heated by the sun (e.g. solar radiation), due to atmospheric convection. Darker-colored regions surrounded by lighter-colored regions on the ground are likely areas above which to find thermals. Similarly, an urban regions with roadway or other pavement surrounded by lighter-colored regions may also become unevenly heated by the sun and thereby generate thermal activity. Other indicators may be observed (either by human eye or by means of a camera and suitable detection system), that indicate the likely presence of thermal activity. For example a cumulus cloud (or plural, cumuli) may be formed due to a rising cone of air (e.g. a thermal). Therefore, the presence of a cumulus cloud may indicate the location of a corresponding thermal.

Locating and flying the air vehicle towards areas where thermal activity may be found can be very time consuming for the UAV remote operator. This may cause stress, frustration and fatigue, since the manual pilot must keep flying the UAV while looking forward to fly the UAV in the identified areas for longer lasting flights. In some cases, too much effort and time are spent in order to bring the UAV to those areas where thermal activity is found. It may happen that the task of searching for areas in which thermal activity is found can result in that more energy is spent for reaching said areas and struggling against descents, than that energy which is saved or gained due to flying the UAV through said areas. Thus, the energy balance of such strategy might be negative, where the time and energy spent searching for and navigating to an area where a thermal may be found can exceed the benefit gained by the thermal itself. Additionally, in cases of long lasting flights, if the pilot of the UAV must keep looking for areas for flying the UAV where thermal activity is found, the fatigue that this task causes in the manual pilot might even compromise the safety of the flight, compromising the UAV mission and/or the UAV itself. Thus, in order to overcome the aforementioned drawbacks and others known to a person of skill in the relevant art, a novel air vehicle navigation system and a method of flying an air vehicle are described within the present specification.

Patent document WO2015049681-A1 discloses a system configured to collect information on currents of air and characterize physical parameters thereof (in particular, location and strength of updrafts and downdrafts). Patent document EP2629166-A1 discloses a method of operating a UAV that harvests energy from updrafts.

**SUMMARY**

The present disclosure, as has already been introduced, refers to an air vehicle navigation system. The air vehicle navigation system, according to a preferred embodiment thereof, includes at least one microcontroller unit and at least one radio receiver unit both located onboard an air vehicle. The system further includes, according to a preferred embodiment thereof, at least one control station for controlling the air vehicle at a predetermined distance from the air vehicle.

According to a preferred embodiment of the air vehicle navigation system, the control station is configured to store at least one map, which is discretized according to a grid, the grid including grid locations. The grid locations represent points in a flying field where the air vehicle flies. A determined score is associated to each grid location upon the map according to thermals located in the points in the flying field represented by the grid locations.

The microcontroller unit is preferably configured for receiving, via the radio receiver unit, instructions from the control station for flying the air vehicle towards points in the flying field where atmospheric thermal activity is located.

The mentioned score associated to each grid location upon the map is allocated based on any combination of one or more of at least:

- the probability of finding thermals in the point of the flying field represented by each grid location;

- the type of thermal present in the point of the flying field represented by each grid location;

- the strength of the thermal present in the point of the flying field represented by each grid location.

The control station is preferably configured to update the map according to data received by the microcontroller unit.

According to a preferred embodiment of the air vehicle navigation system, a determined wind vector is associated to each grid location upon the map comprising a flying field where the air vehicle flies.

The system further comprises, according to a preferred embodiment thereof, any combination of one or more of at least the following flight sensors connected to the microcontroller unit:

- at least one thermal camera located onboard the air vehicle, wherein the thermal camera points towards terrain;

- at least one visual camera located onboard the air vehicle, wherein the visual camera points towards a point in sky;

- at least one inertial measurement unit located onboard the air vehicle;

- at least one global positioning system coordinates receiver;

- at least one indicated airspeed sensor;

- at least one variometer.

According to a preferred embodiment of the air vehicle navigation system, the microcontroller unit is configured for sending to the control station data comprising measurements taken by any of the flight sensors.

The microcontroller unit is configured, according to a preferred embodiment of the air vehicle navigation system, to store flight laws instructing how to fly the air vehicle under a thermal.

The present disclosure also refers to a method of flying an air vehicle.

According to a preferred embodiment of the method of flying an air vehicle, at least one microcontroller unit is used for guiding the air vehicle. The microcontroller unit is preferably located onboard the air vehicle. The microcontroller unit is connected to at least one radio receiver unit that receives instructions for flying the air vehicle. These instructions are received from at least one control station, which may either be a Ground Control Station (GCS) or a control Station located elsewhere (onboard a vehicle, for instance). The control station sends instructions for flying the air vehicle towards points where thermals are located. The control station sends the instructions according to at least one map stored therein. This map is discretized according to a grid comprising grid locations, said grid locations representing points in a flying field where the air vehicle flies. A determined score is associated to each grid location upon the map.

The mentioned score associated to each grid location upon the map is allocated based on any combination of one or more of at least:

- the probability of finding a thermal in the point of the flying field represented by each grid location;

- the type of thermal present in the point of the flying field represented by each grid location; and

- the strength of the thermal present in the point of the flying field represented by each grid location.

According to a preferred embodiment of the method of flying an air vehicle, the map is updated according to data received by the control station from the microcontroller unit.

Also according to a preferred embodiment of the method, a determined wind vector is associated to each grid location upon the map comprising the flying field where the air vehicle flies.

The microcontroller unit is preferably connected to any combination of one or more of at least the following flight sensors:

- at least one thermal camera located onboard the air vehicle, wherein the thermal camera is connected to the microcontroller unit, wherein the thermal camera points towards terrain;

- at least one visual camera located onboard the air vehicle, wherein the visual camera is connected to the microcontroller unit, wherein the visual camera points towards a point in sky;

- at least one inertial measurement unit located onboard the air vehicle;

- at least one global positioning system coordinates receiver;

- at least one indicated airspeed sensor; and

- at least one variometer.

According to a preferred embodiment of the method, the microcontroller unit sends to the control station, via the radio receiver unit, data comprising measurements taken by any of the flight sensors.

The method of flying an air vehicle preferably includes the following steps:

a) selecting a first grid location in the map, said first grid location having an associated first score. The first grid location in the map represents a first point in the flying field of an air vehicle upon which a first thermal is located;

b) assessing whether, according to the wind vector and according to the air vehicle speed, the air vehicle is capable of intercepting the first thermal at a first interception point located in the direction of the wind vector and within the flying field of the air vehicle, wherein:

i. if it is assessed that the air vehicle is capable of intercepting the first thermal at a first interception point located within the flying field of the air vehicle, the method comprises flying the air vehicle towards the first interception point;

ii. if it is assessed that the air vehicle is not capable of intercepting the first thermal at a first interception point located within the flying field of the air vehicle, the method comprises selecting a second grid location in the map. The second grid location in the map represents another point in the flying field of the air vehicle having an associated second score. The method then comprises repeating step b, taking the second grid location as a new first grid location, and the second score as a new first score; and

c) finishing the method if it is determined that the air vehicle is not capable of reaching any thermal at any interception point in the flying field.

Finishing the method involves, according to a preferred embodiment of the method, allocating the air vehicle a terrain scouting task.

According to a preferred embodiment of the method of flying an air vehicle, the target altitude allocated to the air vehicle in a certain point in the flying field is varied if atmospheric thermal activity is detected in that point in the flying field, thus reducing the number of power transients imposed to a fuel cell supplying the air vehicle.

## BRIEF DESCRIPTION OF THE FIGURES

Figure 1: shows a schematic diagram of the different components comprising an exemplary embodiment of the air vehicle navigation system.

Figure 2: shows a schematic diagram of a process to compute a netto variometer reading from a common variometer, passing through a compensated variometer reading.

Figure 3: shows a plot depicting and aircraft's polar and a preferred speed to fly an aircraft.

Figure 4: shows a schematic view of an area where an air vehicle is flying, wherein said area is discretized into continuous regions or grid locations by a mesh or grid pattern.

Figure 5: shows a schematic view of a discretized grid pattern area overlying an example flying area, wherein each grid location in the area has an associated score, and wherein the wind force and direction is represented on the top right corner.

Figure 6: shows another schematic view of a discretized grid pattern area overlying an example flying area, wherein each grid location in the area has an associated score, different than in case shown in Figure 5, and in which the wind force is higher than in the case of Figure 5.

Figure 7: shows in a schematic manner the generation of a grid pattern for the terrain map.

Figure 8: shows a schematic diagram of different phases comprised within an exemplary embodiment of the method of flying an air vehicle.

Figure 9: shows another schematic diagram of different phases comprised within an exemplary embodiment of the method of flying an air vehicle.

## DETAILED DESCRIPTION

The following is a description of exemplary embodiments of the Air Vehicle Navigation System and Method of flying an Air Vehicle. As used herein, the phrase Unmanned Aerial Vehicle (UAV) may refer to an aircraft without a human operator onboard. In this manner, the UAV may alternately be described as a remotely piloted aircraft (RPA) when piloted by a human operator at a distance from the aircraft or may be described as an autonomous vehicle when self-piloted by an onboard flight control system.

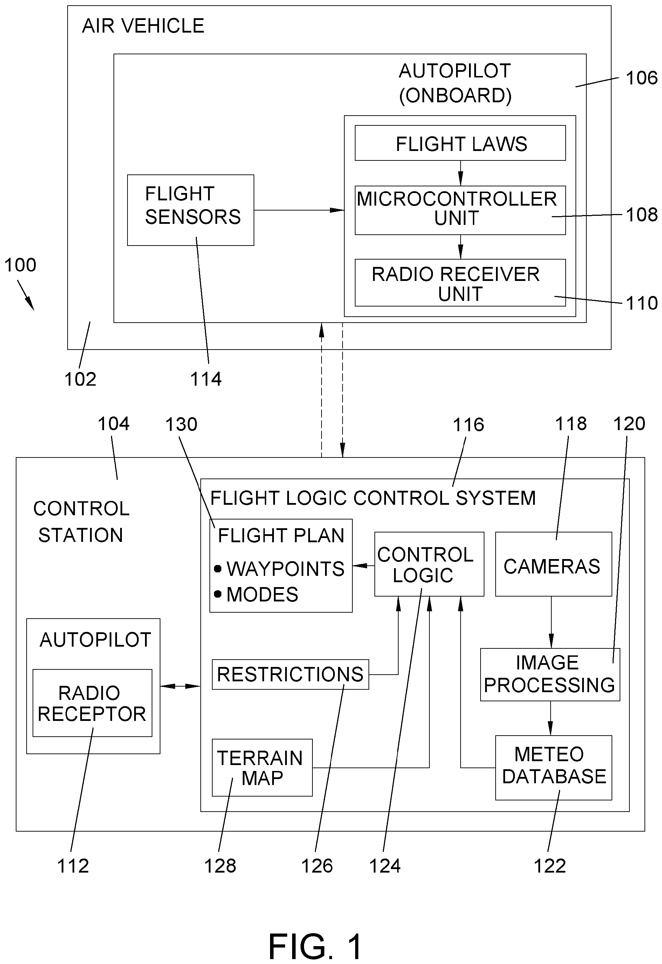

As shown in Figure 1, and according to a preferred embodiment of an air vehicle navigation system 100, the system comprises an air vehicle 102 and a control station 104. The air vehicle may include an onboard autopilot's module 106, said onboard autopilot's module 106 comprising in turn at least one microcontroller unit 108 which is located onboard an air vehicle 102, specifically a UAV. The onboard autopilot's module 106 may further include at least one radio receiver unit 110 connected to the at least one microcontroller unit 108, said radio receiver unit 110 being also located onboard the air vehicle 102.

The microcontroller unit 108 manages the onboard autopilot's module 106. Furthermore, the system comprises a control station 104 controlling the air vehicle 102, said control station 104 being located at a distance from the air vehicle 102. The control station 104 is configured to send instructions to the at least one microcontroller unit 108, via the radio receiver unit 110. A particular UAV may include more than one radio receiver unit. The control station 104 is also configured to receive data from the at least one microcontroller unit 108, via the at least one radio receiver unit 110. The at least one radio receiver unit 110 connected to the at least one microcontroller unit 108 receives and transmits information to the control station 104 via at least one radio transmitter or receptor 112 connected to the control station 104.

According to an exemplary embodiment of the air vehicle navigation system, the control station 104 is located on the ground, therefore being called a Ground Control Station (GCS). Nevertheless, the control station 104 may be located in any other place, such as another vehicle or a centralized control center for instance.

The system preferably comprises flight sensors 114 located onboard the air vehicle 102 and connected to the at least one microcontroller unit 108, the flight sensors 114 taking measurements related to different variables affecting the flight.

According to an exemplary embodiment of the air vehicle navigation system, the flight sensors 114 comprise any combination of one or more of at least the following:

a. at least one thermal camera located onboard the air vehicle 102, wherein the thermal camera points towards terrain;

b. at least one visual camera located onboard the air vehicle 102, wherein the visual camera points towards a point in sky (e. g. to cumulus or other clouds which may give an indication of atmospheric thermal activity);

c. at least one inertial measurement unit located onboard the air vehicle 102;

d. at least one global positioning system coordinates receiver;

e. at least one indicated airspeed sensor;

f. at least one variometer.

Images taken by the visual camera may be processed according to an algorithm that detects the white of the cumuli in contrast with the blue of the sky, and can estimate a cloud's volume and localize its center.

As used herein, a vario (variometer, or VSI, which stands for Vertical Speed Indicator) is a device that measures vertical speed, that is, how fast an aircraft is climbing or diving. It is one of the flight instruments that inform the autopilot of an aircraft of the nearly instantaneous rate of descent or climb. There are two kinds of variometers: normal variometers (VSI) and compensated variometers (also known as total energy variometers). The first one reads differences in ambient pressure and shows this information as a vertical speed reading. However, such speed could be produced by the aircraft maneuvering, instead of an air mass that is going up or down, such as a thermal or a descend. That kind of variometer is called "uncompensated". The second kind of variometer avoids a false reading due to an aircraft maneuver. The actions of diving or pulling up affect the speed of the air vehicle, exchanging potential energy for kinetic energy or vice versa; that is the reason why a compensated variometer is also called "Total Energy Variometer".

The driving principle of a total energy variometer is:

- Total Energy = Potential Energy + Kinetic Energy

$$E_{total} = E_{Kinetic} + E_{Potential} = m \times g \times h + \frac{1}{2} \times m \times V^2 \quad [1]$$

- Making the hypothesis of flying in calm air conditions (the ambient is not injecting energy to the aircraft, that is to say that the aircraft is not inside a thermal), the total energy is constant. That means that in calm air conditions, an increment in speed (due for example to the pilot pushing the stick control of the cabin) is associated to a descent in height:

$$\Delta E_{Potential} + \Delta E_{Kinetic} = 0 \rightarrow \Delta E_{Potential} = -\Delta E_{Kinetic}$$

- This allows compensating the effect of the pilot choosing to pull up to enter a thermal or to dive to exit a sink area. While an uncompensated variometer would include the change in altitude due to the change in velocity in its read-out (thus marring the air mass' climb or sink rate), the compensated variometer does not include it, thus giving the real measure of the change in altitude only due to the thermal activity.

Due to weight reasons (a low weighing variometer is preferred), the variometer used in practical implementations of an exemplary embodiment of the air vehicle navigation system, object of the present disclosure, is a commercially available variometer, namely an FR Sky vario, model number 001 HP (High Pressure), provided by FR Sky company in Jiangsu, China.

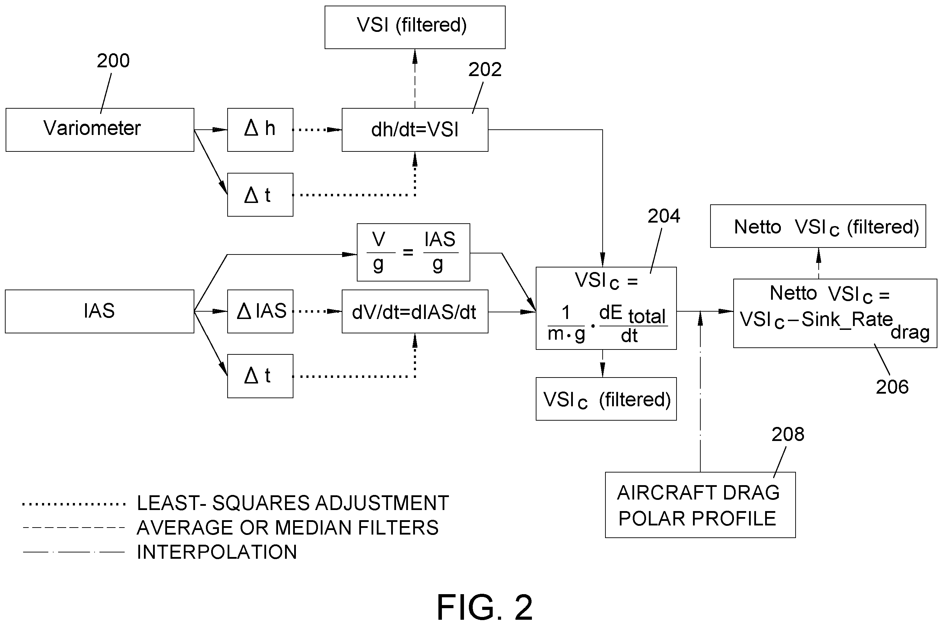

The commercial vario named above is being selected only for its reduced weight, and its output is not an altitude but rather a voltage signal which is further treated for it to be converted in an altitude signal useful for the pilot and/or autopilot. A software has been used that calculates the compensation term (which in turn takes into account the total energy balance); the result of this implementation is a compensated varioaltimeter (Total Energy Varioaltimeter). Figure 2 shows a schematic diagram of the steps taken to convert the signal taken from the variometer 200 (uncompensated) to a compensated measure 204, and further to a netto measure 206.

The mathematical model used to compensate the variometer reading 202 (thus isolating the variometer reading from speed variations caused by the pilot's deliberated maneuvers) consists in making a first order derivative equation from the previous equation [1]:

- $$\frac{dE_{Total}}{dt} = m \times g \times \frac{dh}{dt} + m \times V \times \frac{dV}{dt} \rightarrow \frac{1}{m \times g} \times \frac{dE_{Total}}{dt} = \frac{dh}{dt} + \frac{V}{g} \times \frac{dV}{dt}$$

Where:

- $\frac{1}{m \times g} \times \frac{dE_{Total}}{dt}$ is the compensated variometer's reading (which is what is wanted), where the term VSI$_c$ in Figure 2 stands for "Vertical Speed Indicator compensated", and is equivalent to $\frac{1}{m \times g} \times \frac{dE_{Total}}{dt}$;

- $\frac{dh}{dt}$ is the variometer's reading (m/s) of the vertical speed, where the term VSI in Figure 2 stands for Vertical Speed Indicator, and is equivalent to $\frac{dh}{dt}$;

- $\frac{V}{g} \times \frac{dV}{dt}$ is the compensation term, which is calculated from measures taken by speed sensors, where V is the aircraft's speed, equivalent to IAS, which in turn stands for Indicated Air Speed;

A software implementation may be used in order to reduce the variability of the instant measurements of the variometer (filtering the signal, calculating a mean value over a period of time -10 seconds in practical implementations-) and calculate the derivatives (which may be done numerically by least squares adjustment) of the speed measurements taken by aircraft sensors. With this software implementation, the compensation term is calculated and therefore, the compensated variometer's measure 204 is finally obtained.

Further software routines may be used in order to preferably pass from a common total energy variometer to a "Netto Variometer" (also known as "Airmass Variometer") which is a more advanced type of compensated variometer. This type of variometer, in addition to the total energy compensation, adjusts for the intrinsic sink rate of the air vehicle (given by its Lift/Drag characteristic) at a given speed adjusted for the wing loading. The driving principle of a netto variometer (which may be implemented into software routines) is:

- While the total energy variometer does not reflect the actual, exact value of the airmass motion, the netto variometer isolates the value of the airmass motion by analyzing the flying speed of the air vehicle, then calculating the sink rate corresponding to this speed through the aircraft drag polar profile 208 (which is done by interpolating the actual speed in the polar profile), and finally calculating the netto vario measure 206 through the equation:

$$Vario_{Netto\ reading} = Vario_{Total\ Energy\ reading} - Sink\_rate_{drag} \rightarrow Netto\ VSI_c$$
$$= VSI_c - Sink\_rate_{drag}$$

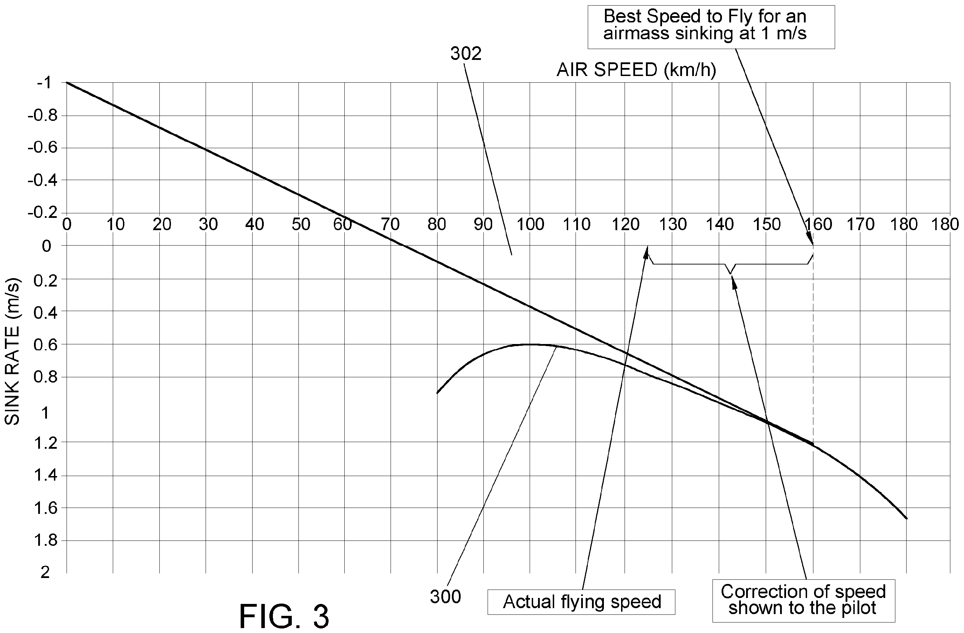

- Let's assume that a particular aircraft is flying at a speed (IAS -indicated air speed, V-) of 125 km/h. As shown in Figure 3 by means of the aircraft's polar profile 300, the aircraft has the natural trend to sink in calm air at a rate of 0.8 m/s.

- The total energy variometer does not take into account this fact. The aircraft's polar profile 300 is transparent to the measurement of the total energy variometer. Let's also assume that when flying in still air, the aircraft's total energy variometer measures an aircraft's current sink rate of 0.8 m/s down. This is not really due to an airmass going up or down, but to the natural tendency of that particular aircraft. The total energy variometer is not capable of making the difference. On the contrary, in still air, the netto variometer would read zero at any speed if the polar profile assumed for the aircraft is correct. The netto variometer therefore measures the real value of the airmass motion.

Lastly, a further software routine may be used to compute a best "Speed to Fly" value. The subroutine may plot the tangent 302 to the aircraft's polar 300, which may compensate for the actual sink value of the airmass given by the total energy variometer (which, in the example shown in Figure 3, would be 1 m/s). Then, a tangent 302 to the aircraft's polar 300 is plotted, the tangent 302 passing through the "-1 m/s" value of the Sink Rate axis. Hence, the "best speed to fly" (IAS) may be computed, so as to have the best glide ratio possible thus being capable of gliding farther than in any other condition, for a given loss of altitude at each moment. This provides the pilot with information on how much he/she must accelerate or decelerate from the actual flight condition. The "best speed to fly" provided in the example shown in Figure 3 is the speed which gives the best glide ratio; this "best speed to fly" value is used in two cases: 1) if it is desired that the air vehicle escapes from a descent (because the air vehicle is capable of flying far with little loss of altitude), and; 2) if it is desired that the air vehicle flies long distances between thermals with minimum fuel consumption.

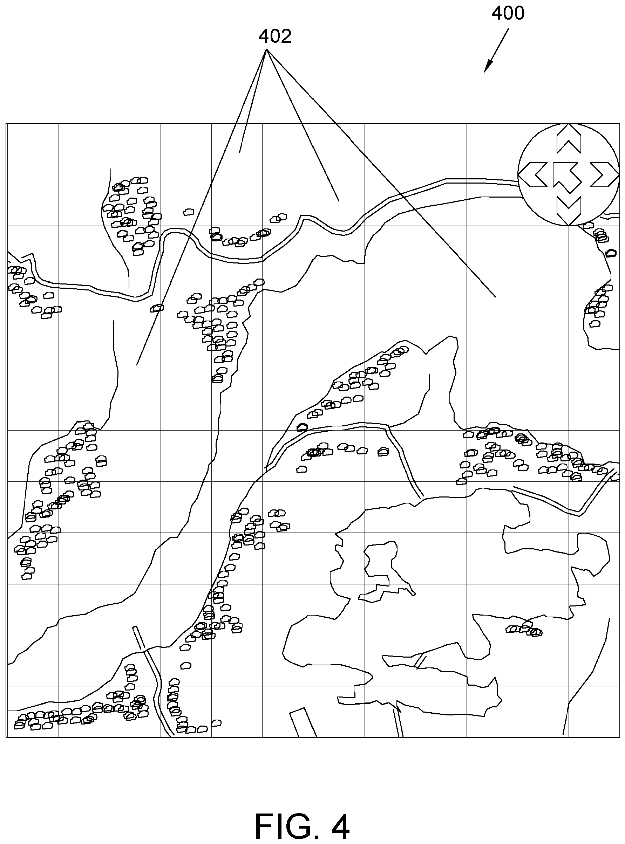

Continuing with the description of a preferred embodiment of the system 100, the at least one microcontroller unit 108 is configured for sending to the control station 104 data comprising measurements taken by the flight sensors 114. Additionally, the control station 104 is configured for storing a terrain map 128 which is discretized according to a grid pattern. As shown in Figure 4, the map 400 comprises grid locations 402, wherein each of said grid locations 402 represents a certain point or area in a flying field where the air vehicle is expected to fly.

Each of the grid locations 402 in the map has associated information regarding the probability that atmospheric thermal activity is to be found in points or areas of the flying field represented by the grid locations 402 in the map.

Additionally, information regarding wind force (magnitude and direction) affecting points or areas in the flying field is associated to the grid locations 402 in the map, in the form of a wind vector.

The control station 104 is configured to send to the at least one microcontroller unit 108, via the at least one radio receiver unit 110, instructions to fly the air vehicle 102 towards points or areas in the flying field where atmospheric thermal activity is located, according to the information provided in the aforementioned terrain map 128 stored in the control station 104.

Additionally, the control station 104 is configured to send to the at least one microcontroller unit 108 instructions about when to quit a thermal when certain conditions are met, according to predetermined flight laws. This case is arbitrarily named as "escape mode" of the Air Vehicle Navigation System.

For example, the control station 104 may instruct the at least one microcontroller unit 108 to make the air vehicle 102 quit a thermal if the climbing speed ($V_A$) is smaller than a predetermined minimum value, which may be called descending speed threshold ($V_D$).

In the previous case, the descending speed threshold ($V_D$) is typically a maximum descending speed, therefore having a negative value with reference to a climbing speed ($V_A$). If the condition $V_A < V_D$ is met, then the "escape mode" is activated, and the control station 104 instructs the at least one microcontroller unit 108 to make the air vehicle 102 quit the thermal as soon as possible. This may be achieved according to a navigation or flight policy of moving forward the air vehicle 102 as much as possible while descending as less as possible. When the flight sensors 114 detect that the air vehicle 102 has quit the thermal, then the escape mode may be deactivated.

When the flight sensors 114 detect that the air vehicle 102 has entered into a thermal, for example, by measuring that the climbing speed ($V_A$) is higher than a climbing speed threshold ($V_T$), the control station 104 instructs the at least one microcontroller unit 108 to fly the air vehicle 102 according to predetermined flight laws, into what may be arbitrarily named as "thermal mode".

The thermal mode preferably comprises flying the air vehicle 102 according to a thermal centering algorithm. The mentioned thermal centering algorithm may comprise instructions to make the air vehicle 102 turn, maintaining an invariant (as far as it is possible) distance with respect to the center of the air currents of the thermal, thus making the air vehicle 102 follow the air currents of the thermal.

The center of the thermal (which may either be a point or an area) is the place of the thermal where the ascent currents reach their maximum. Therefore, the air vehicle, once into the thermal, tries to maintain its turning radius as small as possible.

The position of the center of the thermal may be calculated based on information on the terrain maps 128 comprised in the control station 104 and/or on measurements taken by the flight sensors 114. When the center of the thermal shifts its position (e.g. due to the wind), this is further detected and set as an input into the mentioned thermal centering algorithm to make the air vehicle 102 follow the thermal.

The control station 104 is further configured to update the information on the terrain map 128, according to data received from the at least one microcontroller unit 108, these data comprising measurements taken by the flight sensors 114.

Thus, whenever the flight sensors 114 detect thermal activity in the flying field surrounding the air vehicle 102, the at least one microcontroller unit 108 sends the data comprising the measurements taken by the flight sensors 114 to the control station 104.

The control station 104 further updates the map stored therein, thus re-allocating to grid locations 402 in the map a probability of finding atmospheric thermal activity in points or areas of the flying field represented by said grid locations 402 in the map.

According to a preferred embodiment of the air vehicle navigation system, the at least one microcontroller unit 108 is configured to store the necessary flight laws that instruct the air vehicle 102 about how to fly under atmospheric thermal activity. Nevertheless, the control station 104 may also store the mentioned flight laws.

As has already been introduced, Figure 1 shows a schematic diagram where different components comprised within an exemplary embodiment of the air vehicle navigation system are represented.

As can be seen in Figure 1, the control station 104 may in turn comprise a flight logic control system 116 and an autopilot ground module which communicates (via a radio transmitter or receptor 112) with another autopilot's module 106 located onboard the air vehicle 102. The autopilot's module 106 located onboard the air vehicle 102, according to Figure 1, comprises at least one microcontroller unit 108 and at least one radio receiver unit 110.

Before coupling the two modules of the autopilot, any configuration change performed over the autopilot's ground module must be further re-programmed in the autopilot's onboard module 106 for it to work properly. Once the two autopilot's modules are "coupled", any change performed (via the Control Station 104) over the autopilot's ground module is automatically transmitted to the autopilot's onboard module 106 via radio data link.

According to Figure 1, the flight logic control system 116 comprises several sub-systems, such as for example cameras 118 focusing to the sky (to cumulus or other clouds which may give an indication of atmospheric thermal activity) for developing the maps, an image processing system 120 for analyzing the images taken by the latter cameras 118, a database for storing the meteorological data 122 extracted from the previous analysis, at least one terrain map 128 comprising the areas below the flying field of the air vehicle (these areas may also give an indication of atmospheric thermal activity which might take place over forests, lakes, rivers, mountains and so on), a restrictions' set 126 comprising areas through which it is not allowed to fly the air vehicle, a control logic sub-system 124 to gather the mentioned information and elaborate the maps, and a flight plan unit 130 to establish a flying path for the air vehicle according to the mission allocated to the air vehicle and also according to the elaborated map.

The system 100 is configured in a modular manner, this meaning that it is capable of working, even if some of its components are not working as expected and/or some components are disabled. Thus, a single component failure or deactivation (though maybe making the system 100 lose any of its features) does not render the system 100 unusable.

As has already been introduced, the present disclosure also refers to a method of flying an air vehicle.

The method of flying an air vehicle comprises, according to a preferred embodiment thereof, guiding an air vehicle 102 by means of at least one microcontroller unit 108 connected to at least one radio receiver unit 110 which in turn is connected to a control station 104.

The at least one microcontroller unit 108 and the at least one radio receiver unit (2) are located onboard the air vehicle 102 and receive instructions from the control station 104 for flying the air vehicle 102.

The control station 104 sends instructions for flying the air vehicle 102 towards points or areas in the flying field (flying field surrounding the air vehicle 102 or flying field where the air vehicle 102 is expected to fly), said points or areas characterized by atmospheric thermal activity which is taking place therein.

The control station 104 sends its instructions to the at least one microcontroller unit 108 via at least one radio transmitter or receptor 112 connected to the control station 104.

The control station 104 sends its instructions according to information regarding atmospheric thermal activity taking place in certain points or areas in the flying field, wherein the control station 104 stores this information in the form of a map, wherein the map is discretized according to a grid that comprises grid locations 402 representing the mentioned points or areas in the flying field, wherein the mentioned information is associated to said grid locations 402 in the map.

The grid locations 402 in the map have an associated probability of finding atmospheric thermal activity in points or areas of the flying field represented within said grid locations 402.

The grid locations 402 in the map also have information regarding the type (ascent and/or descent currents) and strength of the atmospheric thermal activity taking place in points or areas of the flying field represented by the grid locations 402.

The grid locations 402 in the map also have associated information regarding the wind force or strength (including magnitude and direction) in points or areas of the flying field represented by said grid locations 402.

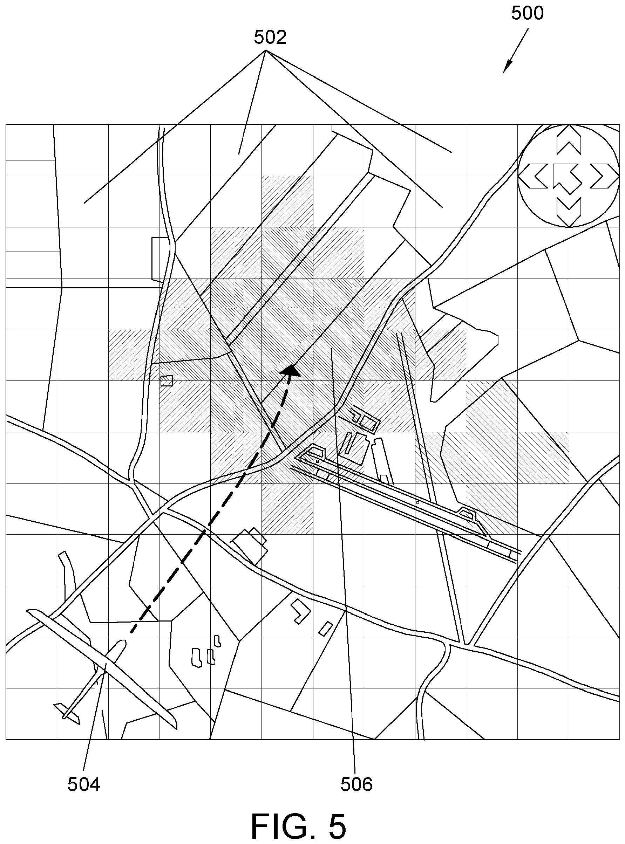

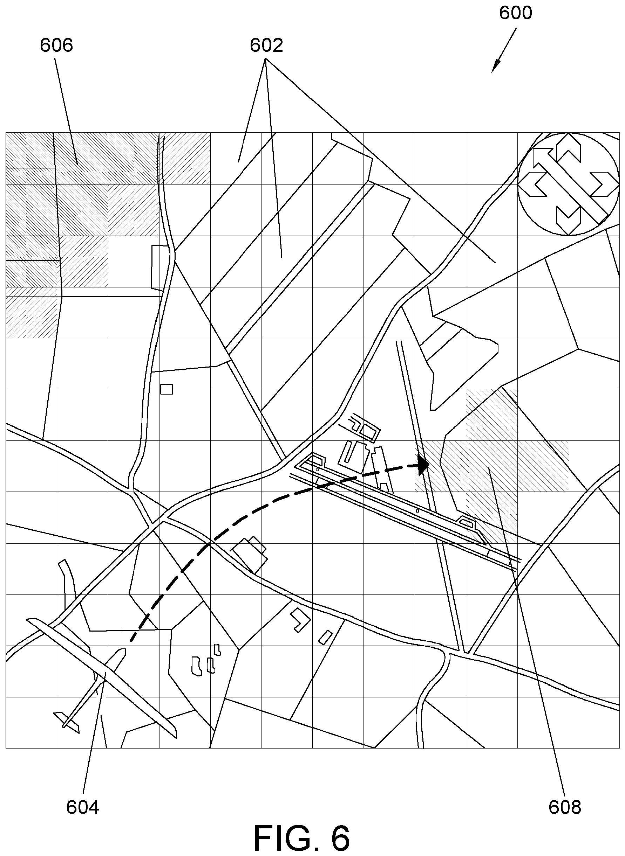

Figures 4, 5 and 6 depict an example of the mentioned map. Figures 5 and 6 depict two different cases with either different wind force (wind vector) associated to the grid locations 502, 602 in the map 500, 600.

The method of flying an air vehicle comprises updating the map with information received from the at least one microcontroller unit 108.

The at least one microcontroller unit 108 sends information or data to the control station 104, these data comprising measurements taken by flight sensors 114 connected to the at least one microcontroller unit 108.

These flight sensors 114 may comprise any combination of at least the following:

a. at least one thermal camera located onboard the air vehicle 102, wherein the thermal camera points towards terrain;

b. at least one visual camera located onboard the air vehicle 102, wherein the visual camera points towards a point in sky (e. g. to cumulus or other clouds which may give an indication of atmospheric thermal activity);

c. at least one inertial measurement unit located onboard the air vehicle 102;

d. at least one global positioning system coordinates receiver;

e. at least one indicated airspeed sensor;

f. at least one variometer (preferably a total energy variometer).

Each grid location 402, 502, 602 in the map 400, 500, 600 has an associated score, depending on the probability of finding atmospheric thermal activity in the point or area of the flying field represented by said grid location 402, 502, 602, and also depending on the strength and type of thermal current (ascent or descent).

The score associated to each grid location 402, 502, 602 in the map is updated with the information that the control station 104 receives from the at least one microcontroller unit 108.

According to an exemplary embodiment (shown in Figures 5 and 6) of the method of flying an air vehicle, the method comprises the following steps:

    a. selecting a first grid location 506, 606 in the map 500, 600 with an associated first score, said first grid location 506, 606 in the map representing a first point or first area in the flying field of the air vehicle 504, 604 upon which a first thermal is located; preferably, grid locations 502, 602 with the highest score are selected first;

    b. assessing whether, according to the wind vector (wind magnitude and direction) and according to the air vehicle speed (and also according to the air vehicle's remaining fuel), the air vehicle 504, 604 is capable of intercepting the first thermal at an interception point, said interception point located in the direction of the wind vector and within the flying field of the air vehicle 504, 604, wherein:

        i. if it is assessed (see Figure 5) that the air vehicle 504 is capable of intercepting the first thermal at an interception point located within the flying field of the air vehicle 504, the method comprises flying the air vehicle 504 towards said interception point;

        ii. if it is assessed (see Figure 6) that the air vehicle 604 is not capable of intercepting the first thermal at an interception point located within the flying field of the air vehicle 604, the method comprises selecting a next grid location 608 in the map 600 with an associated next score, and repeating step b; wherein the next grid location 608 in the map represents a next point or next area in the flying field of the air vehicle 604 upon which a next thermal is located;

Figures 5 and 6 respectively show examples of how the present method for flying an air vehicle proceeds.

In the case shown in Figure 5, it is assessed that the air vehicle 504 is capable of intercepting a first thermal (initially located at a first point in the flying field, said first point represented by a first grid location 506 in the map 500 with an associated first score) at an interception point located in the direction of the wind and within the air vehicle's flying field. The first score is the highest score from among the scores associated to the grid locations 502 in the map 500. This is due to the fact that the wind force shown in the map 500 is moderate. The grid locations 502 with highest score are represented with a darker color than the grid locations 502 with lower scores. Each grid corresponds to a square, planar region of space at the same altitude where the aircraft is flying, or to a ground surface area having a particular area measurement.

In order to create the grid, the terrain map (representing the terrain allowable to be flown over) is divided into a number a discrete points (grid locations). The mesh size may depend on the terrain, such that if it is a rouged terrain (meaning that there may be many potential areas to start a thermal, i.e. fields, roads, etc., or, on the contrary, areas that might avoid the creation of a thermal, i.e. lakes, rivers, etc.) the result may be a fine mesh; otherwise, a coarser mesh may be considered for the grid pattern.

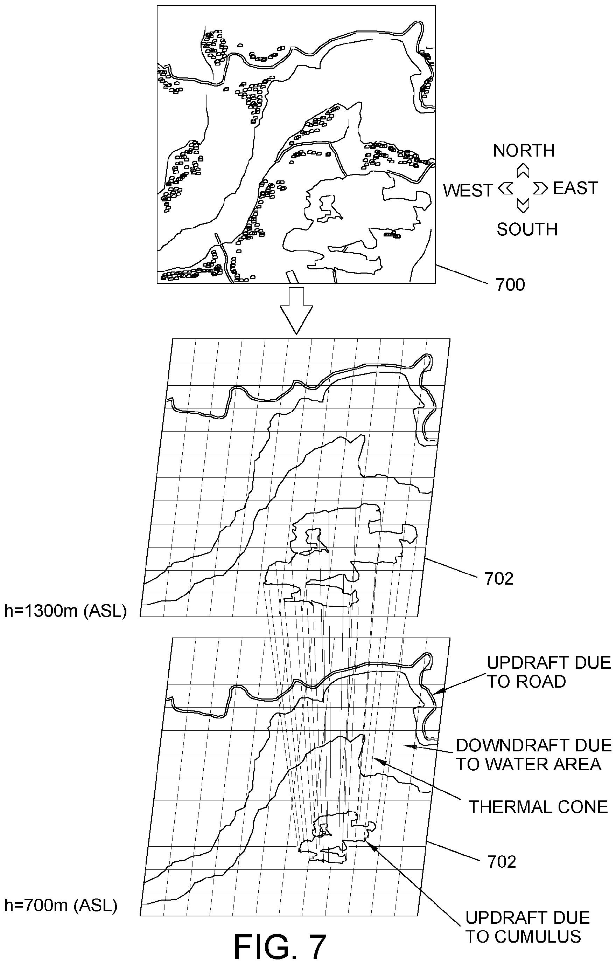

Figure 7 shows a schematic example of the creation of the grid.

Prior to the mission, a map 700 of the terrain is loaded in the Control Station, and this map has geographical references (North-South-East-West). The mesh is generated upon this map and therefore, orientation of the mesh is not an issue because the aircraft itself is equipped with a GPS system (it is commonly equipped with more than one GPS units actually); hence, the aircraft knows its heading at any time.

The mesh is a 3-dimensional mesh. However, a 2-dimensional mesh 702 or grid pattern is generated, as a projection in a horizontal plane over the terrain map, at different flight altitudes. Figure 7 shows a horizontal mesh at 700 m of altitude (above sea level, -ASL-), and a horizontal mesh at an altitude of 1.300 m. By means of a software, which generates a 2-dimensional projection map, and eventually with some inputs from the user (e.g. clouds ceiling, top of mountains' height, etc.), several layers of meshes are built up, according to different heights. Therefore, the navigation system does not initially build up a 2-dimensional mesh, but a 3-dimensional one. It is from this 3-dimensional one that 2-dimensional grid patterns are built as projections, at different altitudes, of the initial 3-dimensional mesh. Figure 7 shows a thermal cone occasioned by an updraft originated by a cumulus. Other terrain elements to be considered, such as roads, may also generate an updraft, while other terrain elements, such as water areas, may lead to downdrafts.

Contrary to the case previously described, which is shown in Figure 5, for the case shown in Figure 6, it is assessed that the air vehicle 604 is not capable of intercepting a first thermal (initially located at a first point in the flying field, said first point represented by a first grid location 606 in the map 600 with an associated first score) at an interception point located in the direction of the wind and within the air vehicle's flying field. This is due to the fact that, in this case, the wind force is higher than in the case shown in Figure 5. Thus, the method comprises selecting a second grid location (next grid location 608) in the map 600 with an associated second score (next score), said second grid location 608 in the map 600 representing a second point in the flying field upon which a second thermal is located. Although the second score is lower than the first score (the second grid locations 608 are represented in a lighter color than the first grid locations 606, due to their lower score), it is assessed in this case that the air vehicle 604 is capable of intercepting the second thermal at an interception point located in the direction of the wind and within the flying field of the air vehicle 604 while it is not capable of intercepting the first thermal at an interception point located within the air vehicle's flying field (as can be appreciated, the first thermal is about to leave the air vehicle's flying field in Figure 6). Thus, the method comprises flying the air vehicle 604 towards the interception point where the second thermal is to be intercepted.

If it is assessed that the air vehicle 504, 604 is not capable of reaching any thermal at any interception point located within the air vehicle's flying field, then the method finishes.

The end of the method may comprise either allocating the air vehicle a tracking mission surveying terrain, or either waiting for the map to be updated with new information sent by the at least one microcontroller unit 108.

When allocating the air vehicle a tracking mission surveying terrain (terrain scouting), the method comprises preferably moving the air vehicle in the direction of the wind vector, because any existing thermal activity will be moved in the direction of the wind too, and thus the air vehicle could profit from another thermal current.

In a particular embodiment, the method further comprises varying the air vehicle's target altitude at a certain point in the flying field, if atmospheric thermal activity is detected at said point in the flying field.

Target altitudes are typically assigned to each waypoint on a route followed by an air vehicle.

However, if thermal activity is found in said points in the flying field, this may involve imposing a continuous number of power transients to the air vehicle, which would be struggling all the time to keep at the prescribed target altitude.

If the air vehicle is powered, at least partially, by a fuel cell, the transients imposed to the air vehicle involve imposing the fuel cell to continuous transients, which result in more fuel consumption and/or in a wane of the fuel cell's life. It is not necessary to specify that more fuel consumption leads to less flight endurance.

Thus, reducing the transients imposed to the fuel cell results in higher flight endurance, and this reduction of the transients is achieved by varying the target altitude at which the air vehicle should fly at certain points in the flying field.

The present method achieves this task automatically, without it being necessary that a manual pilot support this task. The method varies the target altitude thanks to the information provided by the control station 104 (according to the map) and thanks to flight laws stored within the at least one microcontroller unit 108 and/or within the control station 104.

Once the air vehicle enters into a point or area in the flying field where, according to the map, there is atmospheric thermal activity taking place, flight sensors 114 (variometer, for instance) located onboard the air vehicle detect said atmospheric thermal activity and communicate to the control station 104 the data according to the measurements taken.

Thus, the control station 104 is able to toggle the most appropriate pilot mode according to the measured conditions (thermal, escape, cruise, etc.). This being done, the air vehicle's autopilot module 106 (comprising at least one microcontroller unit 108 and at least one radio receiver unit 110) takes into account all the available information (scoring of the thermal, necessary/available motor power, height, attitude, solar radiation (if applicable), etc.). In particular, if the air vehicle 102 is powered by a fuel cell, these changes allow softening the transients in power demand due to changing ambient conditions, increasing the reliability of the fuel cell and thus, increasing the flight endurance.

Whenever the control station 104 takes a decision in order to abandon a thermal, it sends to the at least one microcontroller unit 108 the coordinates of a new target waypoint (point in the flying field) and the path to follow (do terrain scouting, fly through intermediate waypoints, etc.). Alternatively, the control station 104 may limit to activate the escape mode and let the air vehicle 102 quit the thermal according to predetermined flight laws.

Possible reasons to quit a thermal are:

- not enough power being extracted from the ambient;

- any predetermined routine like a limitation in upward/downward velocity; for instance, if there is a limitation in pitch down in the air vehicle 102 (or heavy Proportional-Integral-Derivative - PID - loops) to aim for a minimum fuel consumption, it may happen that the air vehicle 102 gets stuck into a thermal; in this case, a predetermined pattern transversal to the direction of the wind (which is also the direction of the thermal shifting) may be launched.

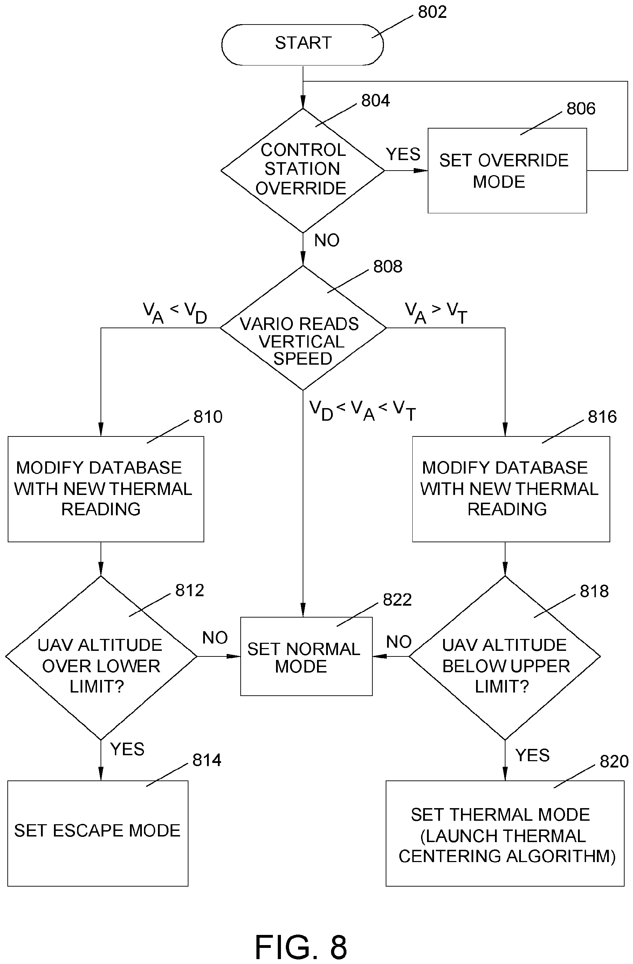

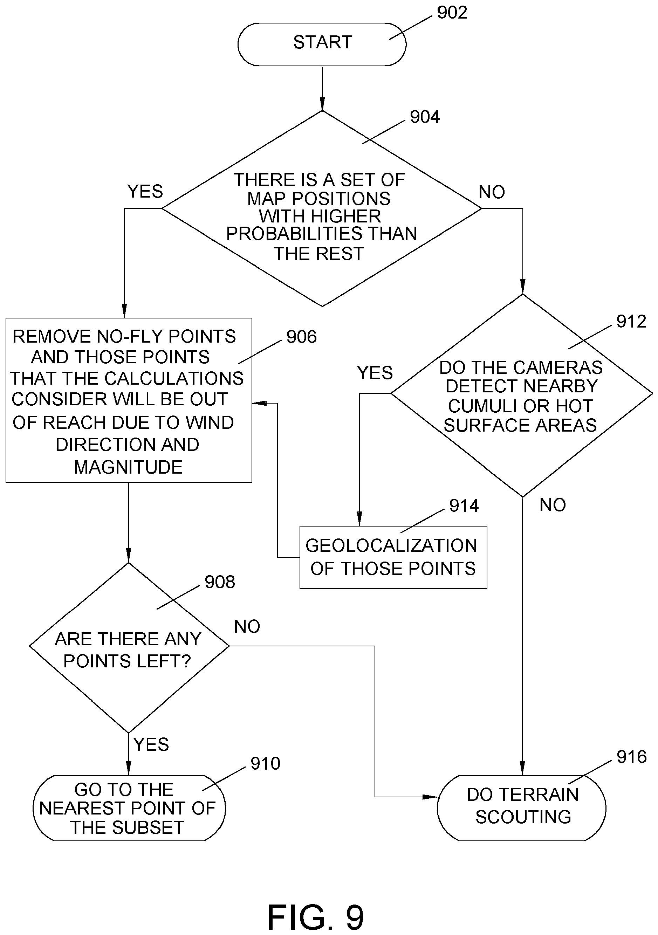

Figures 8 and 9 depict an exemplary embodiment of the method described above.

As shown in Figure 8, the method comprises initializing 802 the Control Station and the autopilot's onboard module, verifying 804 whether there is a Control Station Override and, if so, setting override mode 806, therefore letting the air vehicle 102 be remotely controlled by the Control Station.

If there is no Control Station override, the method comprises reading 808 the vertical speed measured by means of the varioaltimeter (variometer), and verifying whether: the climbing speed ($V_A$) is either lower than the descending speed threshold ($V_A < V_D$), higher than the descending speed threshold and lower than the climbing speed threshold ($V_D < V_A < V_T$), or either higher than the climbing speed threshold ($V_A > V_T$).

If the climbing speed ($V_A$) is lower than the descending speed threshold ($V_A < V_D$), then the method comprises modifying 810 the database with data from new thermal readings, and verifying 812 whether the altitude of the UAV is lower than a predetermined lower limit. If the UAV altitude is over lower limit, then the escape mode is set 814. Otherwise, the Normal mode is set 822, this meaning that the method involves searching for new thermals and/or flying the air vehicle towards areas where it is assumed that thermals are located.

If the climbing speed ($V_A$) is higher than the descending speed threshold and lower than the climbing speed threshold ($V_D < V_A < V_T$), then the normal mode is set 822.

If the climbing speed ($V_A$) is higher than the climbing speed threshold ($V_A > V_T$), then the method comprises modifying 816 the database with data from new thermal readings and verifying 818 whether the altitude of the UAV is below a predetermined upper limit. If the UAV altitude is below the upper limit (this means the UAV is already within a thermal) the thermal mode is set 820 and the thermal centering algorithm is launched). If the UAV altitude is not below the upper limit, the normal mode is set 822.

Figure 9 shows, according to a preferred embodiment of the method, how the normal mode runs.

After initializing 902 the normal mode, it is verified 904 whether there is a set of map positions (grid locations) with higher probabilities of finding a thermal than the rest.

If it is determined that there is a set of map positions with higher probabilities of finding a thermal than the rest of map positions, then the method comprises removing 906 no-fly points (grid locations corresponding to not allowed flying over points) and also those points (grid locations corresponding to points in the flying field) which, according to calculations, are considered to be out of reach due to wind direction and magnitude. Once those points are removed, the method comprises verifying 908 whether there are still points left (grid locations corresponding to points which have not been removed) and, if so, flying the air vehicle to the nearest of those points 910. If after removing 906 no fly points and points considered to be out of reach for the air vehicle, it is verified 908 that there are no points left, the method comprises instructing the air vehicle to perform terrain scouting 916.

If it is verified 904 that there is no set of map positions with higher probabilities of finding a thermal thereupon, the method comprises verifying whether the cameras (at least one visual camera and at least one thermal camera) detect cumuli or hot surface areas 912. If either cumuli or hot surface areas are detected, the method comprises geolocalizing 914 those points and establishing them as map positions with higher probabilities than the rest.

If neither cumuli nor hot surface areas are detected, the method comprises instructing the air vehicle to perform terrain scouting 916.

Further embodiments of the methods disclosed may include a computer programmed to operate in accordance with the methods described herein. The computer may be associated with a conventional flight simulator. In turn, the computer may include a processor and a memory for a computer program, that when executed causes the processor to operate in accordance with the methods described herein. The computer program may also be embodied in a computer readable medium having stored therein the computer program.

**Claims**

1. An Air Vehicle Navigation System (100) comprising:

   at least one microcontroller unit (108) and at least one radio receiver unit (110) both located onboard an air vehicle (102, 504, 604), wherein the at least one microcontroller unit (108) is configured for receiving, via the at least one radio receiver unit (110), instructions for flying the air vehicle (102, 504, 604) towards points in a flying field where atmospheric thermal activity is located;
   at least one control station (104) at a predetermined distance from the air vehicle, the at least one control station (104) being configured to:

      generate a grid pattern on a terrain map (128, 400, 500, 600, 700), the grid pattern comprising grid locations (402, 502, 602) representing points in the flying field where the air vehicle (102, 504, 604) flies;
      associate a determined score to each grid location (402, 502, 602) according to thermals located in the points in the flying field represented by the grid locations (402, 502, 602), wherein the score is allocated based at least on a probability of finding thermals in the point of the flying field represented by each grid location (402, 502, 602), wherein the probability is assigned considering terrain elements on the terrain map (128, 400, 500, 600, 700);
      send to the at least one microcontroller unit (108), via the at least one radio receiver unit (110), instructions to fly the air vehicle (102, 504, 604) towards points in the flying field where atmospheric thermal activity is located according to the score assigned to the grid locations (402, 502, 602) of the terrain map (128, 400, 500, 600, 700).

2. The system of claim 1, wherein the mesh size of the grid pattern is selected in dependence upon the terrain elements on the terrain map (128, 400, 500, 600, 700).

3. The system of any preceding claim, wherein the at least one control station (104) is configured to generate a 3-dimensional mesh upon a terrain map (700), the 3-dimensional mesh comprising a 2-dimensional mesh (702) at different flight altitudes.

4. The system of any preceding claim, further comprising a variometer located onboard the air vehicle (102, 504, 604), wherein the at least one microcontroller unit (108) is configured to calculate a compensated Vertical Speed Indicator (204) using the readings of the variometer to obtain the real measure of the change in altitude only due to the thermal activity.

5. The system of claim 4, wherein the at least one microcontroller unit (108) is configured to calculate a netto Vertical Speed Indicator (206) using the compensated Vertical Speed Indicator (204) and an aircraft drag polar profile (208), the netto Vertical Speed Indicator (206) measuring the real value of the airmass motion in order to obtain the real measure of the change in altitude that adjusts for the intrinsic sink rate of the air vehicle (102, 504, 604).

6. The system of claim 4 or 5, wherein the at least one microcontroller unit (108) is configured to compute, using the compensated Vertical Speed Indicator (204) and an aircraft drag polar profile (300), an aircraft speed value that compensates for the actual sink value of the airmass motion.

7. The system of claim 1, wherein the mentioned score associated to each grid location (402, 502, 602) upon the at least one terrain map (128, 400, 500, 600, 700) is allocated based on any combination of the probability of finding thermals in the point of the flying field represented by each grid location (402, 502, 602) with one or more of at least:

the type of thermal present in the point of the flying field represented by each grid location (402, 502, 602); and the strength of the thermal present in the point of the flying field represented by each grid location (402, 502, 602).

8. The system of claim 1, wherein a determined wind vector is associated to each grid location (402, 502, 602) upon the at least one terrain map (128, 400, 500, 600, 700) comprising a flying field where the air vehicle (102, 504, 604) flies.

9. The system of claim 1, further comprising at least one thermal camera located onboard the air vehicle (102, 504, 604) and connected to the at least one microcontroller unit (108), wherein the at least one thermal camera points towards terrain; wherein the at least one microcontroller unit (108) is configured to detect hot surface areas using the at least one thermal camera.

10. The system of claim 1, further comprising at least one visual camera located onboard the air vehicle (102, 504, 604) and connected to the at least one microcontroller unit (108), wherein the at least one visual camera points towards a point in sky; wherein the at least one microcontroller unit (108) is configured to detect cumuli using the at least one visual camera.

11. A method of flying an air vehicle, comprising using at least one microcontroller unit (108) for guiding an air vehicle (102, 504, 604), wherein the at least one microcontroller unit (108) is located onboard the air vehicle (102, 504, 604), wherein the at least one microcontroller unit (108) is connected to at least one radio receiver unit (110) that receives instructions for flying the air vehicle (102, 504, 604) towards points in a flying field where atmospheric thermal activity is located;
wherein at least one control station (104):

generates a grid pattern on a terrain map (128, 400, 500, 600, 700), the grid pattern comprising grid locations (402, 502, 602) representing points in the flying field where the air vehicle (102, 504, 604) flies;
associates a determined score to each grid location (402, 502, 602) according to thermals located in the points in the flying field represented by the grid locations (402, 502, 602), wherein the score is allocated based at least on a probability of finding thermals in the point of the flying field represented by each grid location (402, 502, 602), wherein the probability is assigned considering terrain elements on the terrain map (128, 400, 500, 600, 700);
sends to the at least one microcontroller unit (108), via the at least one radio receiver unit (110), instructions to fly the air vehicle (102, 504, 604) towards points in the flying field where atmospheric thermal activity is located according to the score assigned to the grid locations (402, 502, 602) of the terrain map (128, 400, 500, 600, 700).

12. The method of claim 11, wherein the mesh size of the grid pattern is selected in dependence upon the terrain elements on the terrain map (128, 400, 500, 600, 700).

13. The method of claim 11 or 12, further comprising the at least one control station (104) generating a 3-dimensional mesh upon a terrain map (700), the 3-dimensional mesh comprising a 2-dimensional mesh (702) at different flight altitudes.

14. The method of 11, wherein the mentioned score associated to each grid location (402, 502, 602) upon the at least one terrain map (128, 400, 500, 600, 700) is allocated based on any combination of the probability of finding thermals in the point of the flying field represented by each grid location (402, 502, 602) with one or more of at least:

the type of thermal present in the point of the flying field represented by each grid location (402, 502, 602); and
the strength of the thermal present in the point of the flying field represented by each grid location (402, 502, 602).

15. The method of claim 11, further comprising the following steps:

a. selecting a first grid location (506, 606) in the at least one terrain map (500, 600) with an associated first score, the first grid location (506, 606) in the at least one terrain map (500, 600) representing a first point in the flying field of an air vehicle (504, 604) upon which a first thermal is located;
b. assessing whether, according to the wind vector and according to the air vehicle speed, the air vehicle (504, 604) is capable of intercepting the first thermal at a first interception point located in the direction of the wind vector and within the flying field of the air vehicle (504, 604), wherein:

i. if it is assessed that the air vehicle (504) is capable of intercepting the first thermal at a first interception point located within the flying field of the air vehicle, the method comprises flying the air vehicle towards the first interception point;
ii. if it is assessed that the air vehicle (604) is not capable of intercepting the first thermal at a first interception point located within the flying field of the air vehicle, the method comprises selecting a second grid location (608) in the at least one terrain map (600) with an associated second score, and repeating step b; and

c. finishing the method if it is determined that the air vehicle (504, 604) is not capable of reaching any thermal at any interception point in the flying field.

16. The method of claim 11, further comprising varying target altitude allocated to the air vehicle in a certain point in the flying field if atmospheric thermal activity is detected in that point in the flying field, to reduce the number of power transients imposed to a fuel cell supplying the air vehicle.

**Patentansprüche**

1. Luftfahrtnavigationssystem (100) umfassend:

mindestens eine Mikrocontrollereinheit (108) und mindestens eine Funkempfängereinheit (110), die sich beide an Bord eines Luftfahrzeugs (102, 504, 604) befinden, wobei die mindestens eine Mikrocontrollereinheit (108) dazu ausgelegt ist, über die mindestens eine Funkempfängereinheit (110) Anweisungen zum Fliegen des Luftfahrzeugs (102, 504, 604) zu Punkten in einem Flugfeld, an denen atmosphärische thermische Aktivität auftritt, zu empfangen;
mindestens eine Kontrollstation (104) in einem vorbestimmten Abstand von dem Luftfahrzeug, wobei die mindestens eine Kontrollstation (104) ausgelegt ist zum:

Anlegen eines Rasterschemas auf einer Geländekarte (128, 400, 500, 600, 700), wobei das Rasterschema Rasterpositionen (402, 502, 602) umfasst, die Punkte in dem von dem Luftfahrzeug (102, 504, 604) durchflogenen Flugfeld darstellen;
Verknüpfen jeder Rasterposition (402, 502, 602) mit einer bestimmten Wertung entsprechend der an den durch die Rasterpositionen (402, 502, 602) dargestellten Punkten im Flugfeld auftretenden Thermik, wobei die Zuteilung der Wertung zumindest aufgrund einer Wahrscheinlichkeit des Auftretens von Thermik an dem durch die jeweilige Rasterposition (402, 502, 602) dargestellten Punkt des Flugfeldes erfolgt, wobei die Zuordnung der Wahrscheinlichkeit unter Berücksichtigung von Geländeelementen auf der Geländekarte (128, 400, 500, 600, 700) erfolgt;
Senden von Anweisungen an die mindestens eine Mikrocontrollereinheit (108) über die mindestens eine Funkempfängereinheit (110) zum Fliegen des Luftfahrzeugs (102, 504, 604) zu Punkten in dem Flugfeld, an denen gemäß der den Rasterpositionen (402, 502, 602) der Geländekarte (128, 400, 500, 600, 700) zugeordneten Wertung atmosphärische thermische Aktivität auftritt.

2. System nach Anspruch 1, wobei die Gittergröße des Rasterschemas in Abhängigkeit von den Geländeelementen auf der Geländekarte (128, 400, 500, 600, 700) gewählt wird.

3. System nach einem der vorstehenden Ansprüche, wobei die mindestens eine Kontrollstation (104) zum Anlegen eines 3-dimensionalen Netzes auf einer Geländekarte (700) ausgelegt ist, wobei das 3-dimensionale Netz ein 2-dimensionales Netz (702) in verschiedenen Flughöhen umfasst.

4. System nach einem der vorstehenden Ansprüche, das ferner ein Variometer an Bord des Luftfahrzeugs (102, 504, 604) umfasst, wobei die mindestens eine Mikrocontrollereinheit (108) dazu ausgelegt ist, unter Verwendung der Messwerte des Variometers einen kompensierten Vertikalgeschwindigkeitsindikator (204) zu berechnen, um das tatsächliche Maß der Höhenänderung aufgrund lediglich der thermischen Aktivität zu ermitteln.

5. System nach Anspruch 4, wobei die mindestens eine Mikrocontrollereinheit (108) dazu ausgelegt ist, unter Verwendung des kompensierten Vertikalgeschwindigkeitsindikators (204) und eines Flugzeugwiderstandspolarprofils (208) einen Netto-Vertikalgeschwindigkeitsindikator (206) zu berechnen, wobei der Netto-Vertikalgeschwindigkeitsindikator (206) den tatsächlichen Wert der Luftmassenbewegung misst, um das tatsächliche Maß der Höhenänderung, das die intrinsische Sinkgeschwindigkeit des Luftfahrzeugs (102, 504, 604) berücksichtigt, zu ermitteln.

6. System nach Anspruch 4 oder 5, wobei die mindestens eine Mikrocontrollereinheit (108) dazu ausgelegt ist, unter Verwendung des kompensierten Vertikalgeschwindigkeitsindikators (204) und eines Flugzeugwiderstandspolarprofils (300) einen Flugzeuggeschwindigkeitswert zu berechnen, der den tatsächlichen Sinkwert der Luftmassenbewegung ausgleicht.

7. System nach Anspruch 1, wobei die erwähnte, mit der jeweiligen Rasterposition (402, 502, 602) auf der mindestens einen Geländekarte (128, 400, 500, 600, 700) verknüpfte Wertung aufgrund einer beliebigen Kombination der Wahrscheinlichkeit, dass an dem durch die jeweilige Rasterposition (402, 502, 602) dargestellten Punkt des Flugfeldes Thermik auftritt, mit mindestens einem oder mehreren der folgenden Faktoren, zugeteilt wird:

Art der Thermik an dem durch die jeweilige Rasterposition (402, 502, 602) dargestellten Punkt des Flugfeldes; und
Stärke der Thermik an dem durch die jeweilige Rasterposition (402, 502, 602) dargestellten Punkt des Flugfeldes.

8. System nach Anspruch 1, wobei mit jeder Rasterposition (402, 502, 602) auf der mindestens einen Geländekarte (128, 400, 500, 600, 700), die ein von dem Luftfahrzeug (102, 504, 604) durchflogenes Flugfeld umfasst, ein bestimmter Windvektor verknüpft ist.

9. System nach Anspruch 1, das ferner mindestens eine Wärmebildkamera an Bord des Luftfahrzeugs (102, 504, 604) umfasst, die mit der mindestens einen Mikrocontrollereinheit (108) verbunden ist, wobei die mindestens eine Wärmebildkamera auf das Gelände ausgerichtet ist; wobei die mindestens eine Mikrocontrollereinheit (108) dazu ausgelegt ist, unter Verwendung der mindestens einen Wärmebildkamera heiße Oberflächenbereiche zu erfassen.

10. System nach Anspruch 1, das ferner mindestens eine visuelle Kamera an Bord des Luftfahrzeugs (102, 504, 604) umfasst, die mit der mindestens einen Mikrocontrollereinheit (108) verbunden ist, wobei die mindestens eine visuelle Kamera auf einen Punkt am Himmel ausgerichtet ist; wobei die mindestens eine Mikrocontrollereinheit (108) so ausgelegt ist, dass sie unter Verwendung der mindestens einen visuellen Kamera Cumulus erfasst.

11. Verfahren zum Fliegen eines Luftfahrzeugs, umfassend die Verwendung von mindestens einer Mikrocontrollereinheit (108) zum Lenken eines Luftfahrzeugs (102, 504, 604), wobei sich die mindestens eine Mikrocontrollereinheit (108) an Bord des Luftfahrzeugs (102, 504, 604) befindet, wobei die mindestens eine Mikrocontrollereinheit (108) mit mindestens einer Funkempfängereinheit (110) verbunden ist, die Anweisungen zum Fliegen des Luftfahrzeugs (102, 504, 604) zu Punkten in einem Flugfeld, an denen atmosphärische thermische Aktivität auftritt, empfängt; wobei mindestens eine Kontrollstation (104):

ein Rasterschema auf einer Geländekarte (128, 400, 500, 600, 700) anlegt, wobei das Rasterschema Rasterpositionen (402, 502, 602) umfasst, die Punkte in dem von dem Luftfahrzeug (102, 504, 604) durchflogenen Flugfeld darstellen;

jede Rasterposition entsprechend der an den durch die Rasterpositionen (402, 502, 602) dargestellten Punkten im Flugfeld auftretenden Thermik (402, 502, 602) mit einer bestimmten Wertung verknüpft, wobei die Zuteilung der Wertung zumindest aufgrund einer Wahrscheinlichkeit des Auftretens von Thermik an dem durch die jeweilige Rasterposition (402, 502, 602) dargestellten Punkt des Flugfeldes erfolgt, wobei die Zuordnung der Wahrscheinlichkeit unter Berücksichtigung von Geländeelementen auf der Geländekarte (128, 400, 500, 600, 700) erfolgt;

über die mindestens eine Funkempfängereinheit (110) an die mindestens eine Mikrocontrollereinheit (108) Anweisungen zum Fliegen des Luftfahrzeugs (102, 504, 604) zu Punkten in dem Flugfeld, an denen gemäß der den Rasterpositionen (402, 502, 602) der Geländekarte (128, 400, 500, 600, 700) zugeordneten Wertung atmosphärische thermische Aktivität auftritt, sendet.

**12.** Verfahren nach Anspruch 11, wobei die Gittergröße des Rasterschemas in Abhängigkeit von den Geländeelementen auf der Geländekarte (128, 400, 500, 600, 700) gewählt wird.

**13.** Verfahren nach Anspruch 11 oder 12, wobei das Verfahren ferner umfasst, dass die mindestens eine Kontrollstation (104) ein 3-dimensionales Netz auf einer Geländekarte (700) anlegt, wobei das 3-dimensionale Netz ein 2-dimensionales Netz (702) in verschiedenen Flughöhen umfasst.

**14.** Verfahren nach Anspruch 11, wobei die erwähnte, mit der jeweiligen Rasterposition (402, 502, 602) auf der mindestens einen Geländekarte (128, 400, 500, 600, 700) verknüpfte Wertung aufgrund einer beliebigen Kombination der Wahrscheinlichkeit, dass an dem durch die jeweilige Rasterposition (402, 502, 602) dargestellten Punkt des Flugfeldes Thermik auftritt, mit mindestens einem oder mehreren der folgenden Faktoren, zugeteilt wird:

Art der Thermik an dem durch die jeweilige Rasterposition (402, 502, 602) dargestellten Punkt des Flugfeldes; und

Stärke der Thermik an dem durch die jeweilige Rasterposition (402, 502, 602) dargestellten Punkt des Flugfeldes.

**15.** Verfahren nach Anspruch 11, das ferner die folgenden Schritte umfasst: Auswählen einer ersten Rasterposition (506, 606) auf der mindestens einen Geländekarte (500, 600) mit einer verknüpften ersten Wertung, wobei die erste Rasterposition (506, 606) auf der mindestens einen Geländekarte (500, 600) einen ersten Punkt mit auftretender Thermik im Flugfeld eines Luftfahrzeugs (504, 604) darstellt;

b. Beurteilen, ob das Luftfahrzeug (504, 604) je nach Windvektor und je nach Geschwindigkeit des Luftfahrzeugs in der Lage ist, die erste Thermik an einem ersten, in Richtung des Windvektors und innerhalb des Flugfeldes des Luftfahrzeugs (504, 604) gelegenen Abfangpunkt abzufangen, wobei:

i. wird festgestellt, dass das Luftfahrzeug (504) in der Lage ist, die erste Thermik an einem ersten, innerhalb des Flugfeldes des Luftfahrzeugs befindlichen Abfragepunkt zu erfassen, umfasst das Verfahren das Fliegen des Luftfahrzeugs in Richtung des ersten Abfragepunkts;

ii. wird festgestellt, dass das Luftfahrzeug (604) nicht in der Lage ist, die erste Thermik an einem ersten, innerhalb des Flugfeldes des Luftfahrzeugs befindlichen Abfragepunkt zu erfassen, umfasst das Verfahren das Auswählen einer zweiten Rasterposition (608) auf der mindestens einen Geländekarte (600) mit einer verknüpften zweiten Wertung, und die Wiederholung von Schritt b; und

c. Beenden des Verfahrens, wenn festgestellt wird, dass das Luftfahrzeug (504, 604) an keinem Abfragepunkt des Flugfeldes Thermik erfassen kann.

**16.** Verfahren nach Anspruch 11, ferner umfassend die Änderung der dem Luftfahrzeug an einem bestimmten Punkt des Flugfeldes zugewiesenen Zielhöhe bei Erfassung atmosphärischer thermischer Aktivität an diesem Punkt des Flugfeldes zur Verringerung der von einer das Luftfahrzeug versorgenden Treibstoffzelle abverlangten Anzahl von Leistungsspitzen.

**Revendications**

**1.** Système de navigation pour véhicules aériens (100) comprenant :

au moins une unité de microcontrôleur (108) et au moins une unité de récepteur radio (110) toutes deux situées à bord d'un véhicule aérien (102, 504, 604), dans lequel la au moins une unité de microcontrôleur (108) est configurée pour recevoir, par l'intermédiaire de la au moins une unité de récepteur radio (110), des instructions pour faire voler le véhicule aérien (102, 504, 604) vers des points dans un champ de vol où l'activité thermique atmosphérique est située ;

au moins une station de contrôle (104) à une distance prédéterminée du véhicule aérien, la au moins une station de contrôle (104) étant configurée pour :

générer un motif de grille sur une carte de terrain (128, 400, 500, 600, 700), le motif de grille comprenant des emplacements de la grille (402, 502, 602) représentant des points dans le champ de vol où le véhicule aérien (102, 504, 604) vole ;

associer un score déterminé à chaque emplacement de la grille (402, 502, 602) en fonction des thermiques situés dans les points du champ de vol représentés par les emplacements de la grille (402, 502, 602), dans lequel le score est attribué en fonction au moins d'une probabilité de trouver des thermiques dans le point du champ de vol représenté par chaque emplacement de la grille (402, 502, 602), dans lequel la probabilité est attribuée en considérant les éléments du terrain sur la carte de terrain (128, 400, 500, 600, 700) ;

envoyer à la au moins une des unités de microcontrôleur (108), par l'intermédiaire de la au moins une des unités de récepteur radio (110), des instructions pour faire voler le véhicule aérien (102, 504, 604) vers des points du champ de vol où l'activité thermique atmosphérique est située en fonction du score attribué aux emplacements de la grille (402, 502, 602) de la carte de terrain (128, 400, 500, 600, 700).

2. Système de la revendication 1, dans lequel la taille des mailles du quadrillage est choisie en fonction des éléments du terrain sur la carte de terrain (128, 400, 500, 600, 700).

3. Système de toute revendication précédente, dans lequel la au moins une station de contrôle (104) est configurée pour générer un maillage tridimensionnel sur une carte de terrain (700), le maillage tridimensionnel comprenant un maillage bidimensionnel (702) à différentes altitudes de vol.

4. Système de toute revendication précédente, comprenant en outre un variomètre situé à bord du véhicule aérien (102, 504, 604), dans lequel la au moins une unité de microcontrôleur (108) est configurée pour calculer un indicateur de vitesse verticale compensée (204) en utilisant les lectures du variomètre pour obtenir la mesure réelle du changement d'altitude uniquement en raison de l'activité thermique.

5. Système de la revendication 4, dans lequel la au moins une unité de microcontrôleur (108) est configurée pour calculer un indicateur de vitesse verticale net (206) en utilisant l'indicateur de vitesse verticale compensée (204) et un profil polaire de traînée d'avion (208), l'indicateur de vitesse verticale net (206) mesurant la valeur réelle du mouvement de la masse d'air afin d'obtenir la mesure réelle du changement d'altitude qui s'ajuste au taux de chute intrinsèque du véhicule aérien (102, 504, 604).

6. Système de la revendication 4 ou 5, dans lequel la au moins une unité de microcontrôleur (108) est configurée pour calculer, en utilisant l'indicateur de vitesse verticale compensée (204) et un profil polaire de traînée de l'avion (300), une valeur de vitesse de l'avion qui compense la valeur réelle de la descente du mouvement de la masse d'air.

7. Système de la revendication 1, dans lequel le score mentionné associé à chaque emplacement de la grille (402, 502, 602) sur la au moins une carte de terrain (128, 400, 500, 600, 700) est attribué sur la base de toute combinaison de la probabilité de trouver des thermiques au point du champ de vol représenté par chaque emplacement de la grille (402, 502, 602) avec un ou plusieurs d'entre eux au moins :

le type de thermique présent dans le point du champ de vol représenté par chaque emplacement de la grille (402, 502, 602) ; et

la force du thermique présent dans le point du champ de vol représenté par chaque emplacement de la grille (402, 502, 602).

8. Système de la revendication 1, dans lequel un vecteur vent déterminé est associé à chaque emplacement de la grille (402, 502, 602) sur la carte de terrain (128, 400, 500, 600, 700) comprenant un champ de vol où le véhicule aérien (102, 504, 604) vole.

9. Système de la revendication 1, comprenant en outre au moins une caméra thermique située à bord du véhicule aérien (102, 504, 604) et connectée à la au moins une unité de microcontrôleur (108), dans lequel la au moins une caméra thermique est dirigée vers le terrain ; dans lequel la au moins une unité de microcontrôleur (108) est configurée pour détecter des zones de surface chaude en utilisant la au moins une caméra thermique.

10. Système de la revendication 1, comprenant en outre au moins une caméra visuelle située à bord du véhicule aérien (102, 504, 604) et connectée à la au moins une unité de microcontrôleur (108), dans lequel la au moins une caméra visuelle pointe vers un point dans le ciel ; dans lequel la au moins une unité de microcontrôleur (108) est configurée pour détecter des cumuls en utilisant la au moins une caméra visuelle.

11. Procédé pour faire voler un véhicule aérien, comprenant l'utilisation d'au moins une unité de microcontrôleur (108) pour guider un véhicule aérien (102, 504, 604), dans lequel la au moins une unité de microcontrôleur (108) est située à bord du véhicule aérien (102, 504, 604), dans lequel la au moins une unité de microcontrôleur (108) est connectée à au moins une unité de récepteur radio (110) qui reçoit des instructions pour faire voler le véhicule aérien (102, 504, 604) vers des points dans un champ de vol où l'activité thermique atmosphérique est située ; dans lequel au moins une station de contrôle (104) :

> génère un motif de grille sur une carte de terrain (128, 400, 500, 600, 700), le motif de grille comprenant des emplacements de la grille (402, 502, 602) représentant des points dans le champ de vol où le véhicule aérien (102, 504, 604) vole ;
> associe un score déterminé à chaque emplacement de la grille (402, 502, 602) en fonction des thermiques situés dans les points du champ de vol représentés par les emplacements de la grille (402, 502, 602), dans lequel le score est attribué en fonction au moins d'une probabilité de trouver des thermiques dans le point du champ de vol représenté par chaque emplacement de la grille (402, 502, 602), dans lequel la probabilité est attribuée en considérant les éléments du terrain sur la carte de terrain (128, 400, 500, 600, 700) ;
> envoie à la au moins une des unités de microcontrôleur (108), par l'intermédiaire de la au moins une des unités de récepteur radio (110), des instructions pour faire voler le véhicule aérien (102, 504, 604) vers des points du champ de vol où l'activité thermique atmosphérique est située selon le score attribué aux emplacements de la grille (402, 502, 602) de la carte de terrain (128, 400, 500, 600, 700).

12. Procédé de la revendication 11, dans lequel la taille des mailles du quadrillage est choisie en fonction des éléments du terrain sur la carte de terrain (128, 400, 500, 600, 700).

13. Procédé de la revendication 11 ou 12, comprenant en outre la au moins une station de contrôle (104) générant un maillage tridimensionnel sur une carte de terrain (700), le maillage tridimensionnel comprenant un maillage bidimensionnel (702) à différentes altitudes de vol.

14. Procédé de la revendication 11, dans lequel le score mentionné associé à chaque emplacement de la grille (402, 502, 602) sur la au moins une carte de terrain (128, 400, 500, 600, 700) est attribué sur la base de toute combinaison de la probabilité de trouver des thermiques au point du champ de vol représenté par chaque emplacement de la grille (402, 502, 602) avec un ou plusieurs d'entre eux au moins :

> le type de thermique présent dans le point du champ de vol représenté par chaque emplacement de la grille (402, 502, 602) ; et
> la force du thermique présent dans le point du champ de vol représenté par chaque emplacement de la grille (402, 502, 602).

15. Procédé de la revendication 11, comprenant en outre les étapes suivantes :

> a. sélection d'un premier emplacement de la grille (506, 606) sur la au moins une carte de terrain (500, 600) avec un premier score associé, le premier emplacement de la grille (506, 606) sur la au moins une carte de terrain (500, 600) représentant un premier point dans le champ de vol d'un véhicule aérien (504, 604) sur lequel un premier thermique est situé ;
> b. évaluer si, en fonction du vecteur vent et en fonction de la vitesse du véhicule aérien, le véhicule aérien (504, 604) est capable d'intercepter le premier thermique en un premier point d'interception situé dans la direction du vecteur vent et dans le champ de vol du véhicule aérien (504, 604), dans lequel :

>> i. s'il est estimé que le véhicule aérien (504) est capable d'intercepter le premier thermique en un premier point d'interception situé dans le champ de vol du véhicule aérien, le procédé comprend le vol du véhicule aérien vers le premier point d'interception ;

ii. s'il est estimé que le véhicule aérien (604) n'est pas capable d'intercepter le premier thermique en un premier point d'interception situé dans le champ de vol du véhicule aérien, le procédé comprend la sélection d'un deuxième emplacement de la grille (608) dans la au moins une carte de terrain (600) avec un deuxième score associé, et la répétition de l'étape b ; et

c. terminer le procédé s'il est déterminé que le véhicule aérien (504, 604) ne peut atteindre aucun thermique à aucun point d'interception dans le champ de vol.

16. Procédé de la revendication 11, comprenant en outre la variation de l'altitude cible attribuée au véhicule aérien en un certain point du champ de vol si une activité thermique atmosphérique est détectée en ce point du champ de vol, afin de réduire le nombre de transitoires de puissance imposés à une pile à combustible alimentant le véhicule aérien.

FIG. 1

EP 3 121 676 B1

FIG. 2

FIG. 3

FIG. 4

FIG. 5

FIG. 6

NORTH

WEST ⟪ ⟫ EAST

SOUTH

700

702

h=1300m (ASL)

UPDRAFT DUE TO ROAD

DOWNDRAFT DUE TO WATER AREA

THERMAL CONE

702

h=700m (ASL)

UPDRAFT DUE TO CUMULUS

FIG. 7

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015049681 A1

- EP 2629166 A1